# DEMANDE DE BREVET EUROPEEN

(11) **EP 0 903 911 A1**
(43) Date de publication de la demande: **24.03.1999**
(21) Numéro de dépôt: 98202991.0
(22) Date de dépôt: 07.09.1998
(51) Int. Cl.: H04M 1/57, H04M 3/42, H04B 3/28

(54) **Utilisation d'un annuleur d'echo pour la détection des signaux CAS**

(30) Priorité: 17.09.1997 FR 9711581
(71) Demandeur: Koninklijke Philips Electronics N.V., 5621 BA Eindhoven (NL)
(72) Inventeur: Sandre, Benoît, 75008 Paris (FR)
(74) Mandataire: Landousy, Christian

(57) **Abrégé**

L'invention a pour but d'améliorer la détection de signaux de service (par exemple de signaux CAS) émis par un central téléphonique vers un équipement téléphonique, et susceptibles de se superposer à des signaux utiles.

Pour cela, elle utilise un annuleur d'écho pour annuler l'écho résultant de la réflexion du signal utile reçu sur l'entrée de l'équipement (par exemple un microphone) et qui revient sur sa sortie (par exemple un écouteur). La détection de signaux de service est faite sur le signal sortant de l'annuleur d'écho ce qui permet d'utiliser des critères de sélection plus rigoureux et donc de réduire le taux de fausses détections.

Applications: signal d'appel, identification de l'appelant.

## Description

L'invention concerne un équipement téléphonique comportant:
- une entrée pour recevoir des signaux utiles à transmettre sur une voie de transmission aller, et une sortie pour délivrer des signaux utiles reçus sur une voie de transmission retour, lesdites voies de transmission aller et retour étant couplées à une ligne téléphonique par des moyens de couplage,
- un détecteur de signaux de service transmis par un central téléphonique sur la ligne téléphonique et susceptibles de se superposer à des signaux utiles.

L'invention concerne également une méthode de détection de signaux de service transmis par un central téléphonique à un tel équipement téléphonique, lesdits signaux de service étant susceptibles de se superposer à des signaux utiles.

L'invention a d'importantes applications dans le domaine des transmissions téléphoniques, par exemple pour la mise en oeuvre de services tels que le signal d'appel pour avertir un utilisateur qui est déjà en ligne que quelqu'un d'autre essaye de le joindre.

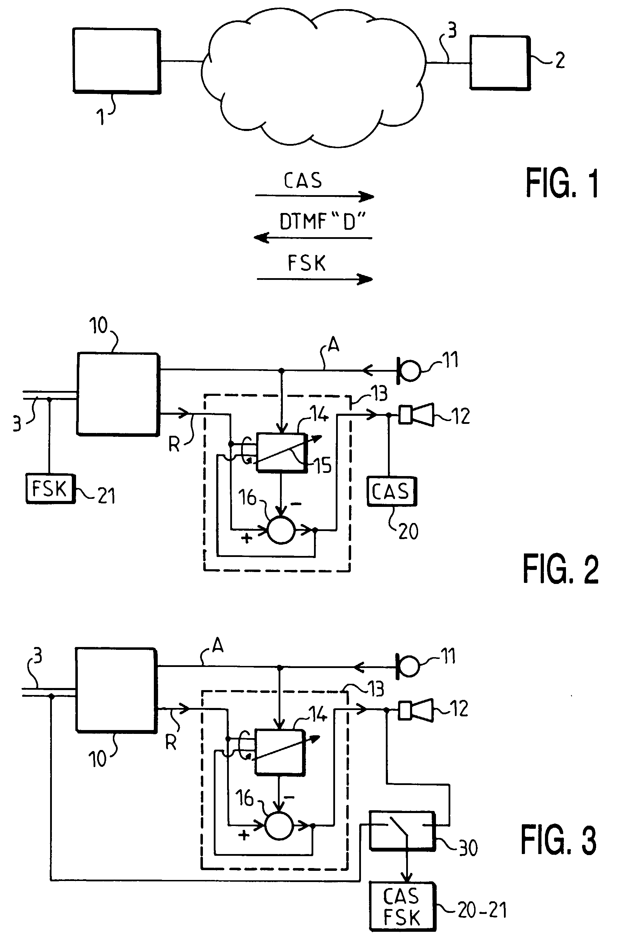

La recommandation ETS 300 778-1 de l'ETSI (de l'anglais European Telecommunications Standard Institute) décrit notamment la procédure qui est mise en oeuvre à cet effet, entre un appelé et le central téléphonique dont il dépend. Cette procédure est résumée sur les figures 1a et 1b. Lorsque le central téléphonique 1 reçoit un appel à destination de l'appelé 2, il envoie un signal de service nommé CAS (de l'anglais Call Alert Signal) sur la ligne téléphonique 3. L'appelé 2 détecte ce signal, coupe les voies audio, et envoie un digit DTMF (de l'anglais Dual Tone Multi Frequency) "D" vers le central téléphonique 1. Sur réception de ce digit DTMF "D", le central téléphonique 1 envoie les coordonnées de l'appelant (nom, numéro de téléphone...) à l'appelé, en modulation FSK (de l'anglais Frequency Shift Keying). Puis la communication téléphonique en cours est rétablie.

Le résumé de brevet japonais n° 08214055 décrit notamment un circuit de réception pour téléphone susceptible de fonctionner selon un mode de détection CAS et selon un mode de détection FSK afin de mettre en oeuvre une telle procédure.

Le problème essentiel qui se pose pour la détection des signaux de service, notamment des signaux CAS, est le suivant. Lorsque le signal de service est susceptible de se superposer à d'autres signaux, il est nécessaire d'utiliser des critères de détection moins rigoureux (notamment les critères de fréquence, de durée, de niveau du signal...) pour assurer sa détection quelque soit le niveau de ces autres signaux. Mais l'utilisation de critères moins rigoureux risque d'entraîner de fausses détections, c'est-à-dire des détections de signaux de service dans un signal utile (la voix d'un correspondant dans le cas d'un signal de service CAS).

L'invention a pour but de proposer un équipement téléphonique et une méthode de détection de signaux de service qui apportent une solution efficace à ce problème.

Pour cela, un téléphone selon l'invention et tel que défini dans le paragraphe introductif est caractérisé en ce qu'il comporte un annuleur d'écho pour annuler l'écho des signaux utiles en provenance de ladite entrée qui reviennent sur ladite sortie, le détecteur de signaux de service étant connecté entre l'annuleur d'écho et ladite sortie au moins lorsque l'équipement téléphonique est en ligne.

De même, une méthode de détection de signaux de service selon l'invention et telle que décrite dans le paragraphe introductif est caractérisée en ce qu'elle consiste à utiliser un annuleur d'écho pour annuler l'écho des signaux utiles en provenance de ladite entrée qui reviennent sur ladite sortie, et à effectuer ladite détection sur les signaux délivrés en sortie de l'annuleur d'écho.

Ainsi, le détecteur de signaux de service ne reçoit ni les signaux émis par les correspondants ni l'écho du signal émis par l'appelé qui revient sur la voie retour lorsque lesdits moyens de couplage et la ligne téléphonique ne sont pas bien adaptés en impédance. Les critères de détection utilisés peuvent donc être plus rigoureux ce qui diminue le risque de fausses détections et améliore grandement la fiabilité du système.

L'invention sera mieux comprise et d'autres détails apparaîtront à la lumière de la description qui va suivre en regard des dessins annexés qui sont donnés à titre d'exemples non limitatifs et dans lesquels:
- les figures 1a et 1b résument la procédure qui est mise en oeuvre entre le central téléphonique et l'équipement téléphonique appelé pour la mise en oeuvre d'un service de signalisation d'appel,
- la figure 2 donne une représentation schématique d'un premier mode de réalisation d'un équipement téléphonique selon l'invention,
- la figure 3 donne un second mode de réalisation d'un équipement téléphonique selon l'invention.

L'invention va maintenant être décrite dans le cas d'un téléphone doté d'un détecteur de signaux CAS. Elle n'est bien sûr pas limitée à cet exemple. Elle s'applique à la détection de tout signal de service susceptible de se superposer à des signaux utiles, et à tout type d'équipements téléphoniques, notamment à des téléphones avec ou sans fils, analogiques ou numériques.

Les figures 1 à 3 sont des schémas sur lesquels seuls les éléments nécessaires à la compréhension de l'invention ont été représentés. D'après la figure 2, un téléphone selon l'invention comporte un convertisseur 2 fils/4 fils 10, qui est couplé d'une part a un microphone 11 par une voie de transmission aller A, et d'autre part à un écouteur 12 par une voie de transmission retour R. Le microphone 11 constitue l'entrée du téléphone; il est destiné à recevoir des signaux utiles qui sont des signaux de voix. L'écouteur 12 constitue la sortie du téléphone; il est destiné à délivrer des signaux utiles qui sont des signaux de voix. Le téléphone comporte également un annuleur d'écho 13 représenté schématiquement par un filtre adaptatif 14. Ce filtre adaptatif engendre, à partir des données prélevées sur la voie aller A, une réplique de l'écho présent sur la voie retour R. Un organe de soustraction 16 soustrait la réplique d'écho du signal fourni par le convertisseur 10. Le filtre adaptatif 14 est réglé en tenant compte du signal prélevé sur la voie de retour R, et du signal prélevé en sortie de l'annuleur d'écho 13, pour annuler le plus possible le signal d'écho à la sortie de l'organe de soustraction 16.

Un détecteur 20 de signaux CAS est connecté entre l'annuleur d'écho 13 et l'écouteur 12. Et un détecteur 21 de signaux FSK est connecté sur la ligne téléphonique.

Ce mode de réalisation s'applique dans tous les pays où les signaux CAS ne sont pas utilisés lorsque le téléphone est hors ligne. On notera que la détection de signaux FSK ne pose pas les mêmes problèmes que la détection de signaux CAS puisque les voies audio sont coupées lors de la transmission FSK (aucun signal de voix ne vient donc s'additionner au signal utile). Il est donc possible de connecter le détecteur de signaux FSK directement sur la ligne téléphonique ce qui lui permet d'être opérationnel lorsque le téléphone est hors ligne (dans ce cas, en effet, il faut prélever le signal utile en amont du convertisseur 2 fils/4 fils qui n'est pas alimenté et ne fonctionne donc pas).

Sur la figure 3, on a représenté un autre mode de réalisation d'un téléphone selon l'invention, applicable lorsque la détection de signaux CAS hors ligne est utilisée.

Dans ce mode de réalisation, un commutateur 30 est placé entre la ligne téléphonique 3 et la sortie de l'annuleur d'écho 13. Lorsque le téléphone est en ligne ce commutateur 30 relie le détecteur de signaux CAS à la sortie de l'annuleur d'écho 13. Lorsque le téléphone est hors ligne, il le relie à la ligne téléphonique 3, permettant ainsi la détection de signaux CAS que le téléphone soit en ligne ou hors ligne.

Dans ce mode de réalisation, le détecteur de signaux FSK est avantageusement intégré au détecteur des signaux CAS.

L'annuleur d'écho 13 et les détecteurs de signaux CAS et FSK sont par exemple réalisés à partir d'un circuit PCD 5091 fabriqué par Philips Semiconductors.

Les techniques d'annulation d'écho sont bien connues de de l'homme du métier. A cet égard on peut par exemple se reporter à l'article intitulé "An Adaptative-Step Sign Algorithm for Fast Convergence of a Data Echo Canceller" publié dans la revue IEEE Transactions on Communications, Volume COM-35, n°10, October 1987.

## Revendications

1. Equipement téléphonique (2) comportant:
- une entrée (11) pour recevoir des signaux utiles à transmettre sur une voie de transmission aller (A), et une sortie (12) pour délivrer des signaux utiles reçus sur une voie de transmission retour (R), lesdites voies de transmission aller et retour étant couplées à une ligne téléphonique (3) par des moyens de couplage (10),
- un détecteur de signaux de service (20) transmis par un central téléphonique (1) sur la ligne téléphonique (3) et susceptibles de se superposer à des signaux utiles,
caractérisé en ce qu'il comporte un annuleur d'écho (13) pour annuler l'écho des signaux utiles en provenance de ladite entrée qui reviennent sur ladite sortie, le détecteur de signaux de service étant connecté entre l'annuleur d'écho et ladite sortie au moins lorsque l'équipement téléphonique (2) est en ligne.

2. Equipement téléphonique selon la revendication 1,
caractérisé en ce qu'il comporte un commutateur (30) pour connecter le détecteur de signaux de service (20), soit entre l'annuleur d'écho (13) et la sortie (12) lorsque l'équipement (2) est en ligne, soit sur la ligne téléphonique (3) lorsque l'équipement téléphonique (2) est hors ligne.

3. Equipement téléphonique selon la revendication 1,
caractérisé en ce que le détecteur de signaux de service (20) comporte un détecteur de signaux CAS (de l'anglais Call Alert Signal) définis notamment dans la recommandation ETS 300 778-1 de l'ETSI.

4. Equipement téléphonique selon la revendication 2,
caractérisé en ce que le détecteur de signaux de service (20) comporte un détecteur de signaux CAS (de l'anglais Call Alert Signal) définis notamment dans la recommandation ETS 300 778-1 de l'ETSI.

5. Equipement téléphonique selon la revendication 4,
caractérisé en ce que le détecteur de signaux de service (20) comporte un circuit de détection de signaux FSK définis notamment dans la recommandation ETS 300 778-1 de l'ETSI.

6. Equipement téléphonique selon la revendication 3,
caractérisé en ce qu'il comporte un circuit de détection de signaux FSK (définis notamment dans la recommandation ETS 300 778-1 de l'ETSI) connecté sur la ligne téléphonique.

7. Méthode de détection de signaux de service transmis par un central téléphonique (1) à un équipement téléphonique (2) auquel il est relié par une ligne téléphonique (3),
- ledit équipement téléphonique comportant une entrée (11) pour recevoir des signaux utiles à transmettre sur une voie de transmission aller (A), et une sortie (12) pour délivrer des signaux utiles reçus sur une voie de transmission retour (R), lesdites voies de transmission aller et retour étant couplées à la ligne téléphonique (3) par des moyens de couplage (10),
- lesdits signaux de services étant susceptibles de se superposer à des signaux utiles,
caractérisée en ce qu'elle consiste à utiliser un annuleur d'écho (13) pour annuler l'écho des signaux utiles en provenance de ladite entrée qui reviennent sur ladite sortie, et à effectuer ladite détection sur les signaux délivrés en sortie de l'annuleur d'écho.
